# EUROPÄISCHE PATENTSCHRIFT

(11) **EP 2 603 911 B1**
(45) Veröffentlichungstag und Bekanntmachung des Hinweises auf die Patenterteilung: **27.05.2020**
(21) Anmeldenummer: 11757750.2
(22) Anmeldetag: 30.07.2011
(51) Int. Cl.: G09F 3/02, G09F 3/10, C09J 7/29, G09F 3/03, B42D 25/318, B42D 25/00, B42D 25/337, B42D 25/47

(54) **SICHERHEITSETIKETT ODER -KLEBEBAND MIT MANIPULATIONSNACHWEIS**
SECURITY LABEL OR ADHESIVE TAPE WITH EVIDENCE OF TAMPERING
ÉTIQUETTE OU BANDE ADHÉSIVE DE SÉCURITÉ DOTÉE D'UN INDICATEUR D'INVIOLABILITÉ

(30) Priorität: 13.08.2010 AT 13572010
(43) Veröffentlichungstag der Anmeldung: 19.06.2013
(73) Patentinhaber: Hueck Folien Gesellschaft m.b.H., 4342 Baumgartenberg (AT)
(72) Erfinder: MAYRHOFER, Marco, 4342 Baumgartenberg (AT); AIGNER, Georg, A-4363 Pabneukirchen (AT)
(74) Vertreter: KLIMENT & HENHAPEL
(86) Internationale Anmeldenummer: PCT/EP2011/003834
(87) Internationale Veröffentlichungsnummer: WO 2012/019722

(56) Entgegenhaltungen:
- EP-A1- 1 972 674
- EP-A1- 2 130 884
- EP-A1- 2 267 686
- WO-A1-01/93231
- US-A1- 2002 191 234

## Beschreibung

Die Erfindung betrifft ein Sicherheitsetikett oder -klebeband mit Manipulationsnachweis, das ein optisch aktives Sicherheitsmerkmal und ein optisches Merkmal aufweist.

Unter einem optisch aktiven Merkmal werden hier Beugungsstrukturen, Beugungsgitter, Oberflächenreliefs, Hologramme, Kinegramme und dergleichen verstanden.

Sicherheitsetiketten oder -klebebänder im Sinne der vorliegenden Erfindung erfüllen zwei Aufgaben: Einerseits soll das Etikett oder Klebeband die Authentizität eines Produktes oder die Integrität einer Verpackung durch die Bereitstellung eines optisch aktiven Sicherheitsmerkmals sicherstellen. Bevorzugt werden zu diesem Zweck Hologramme eingesetzt, die im Bereich des Produktschutzes gut etabliert sind und daher einen hohen Grad an Akzeptanz, Wiedererkennbarkeit und Sicherheit bieten. Andererseits soll jedoch ein Manipulationsversuch, also ein unbefugter Versuch, das Etikett oder Klebeband abzulösen, deutlich erkennbar sein. Letztere Maßnahme stellt sicher, dass dem Benutzer glaubhaft versichert werden kann, dass ein mit einem solchen Etikett oder Klebeband geschütztes Produkt echt und originalverpackt ist.

Typische Hologramme, die bereits heute im Produktschutz und als Sicherheitsmerkmale für Wertdokumente eingesetzt werden, haben üblicherweise eine metallisch glänzende Grunderscheinung, die bei Veränderung des Betrachtungswinkels durch Lichtbeugung an den Strukturen des Hologramms ein Spiel von Regenbogenfarben erzeugt. Diese diffraktiven Effekte sind jedoch stets sehr ähnlich und alle solchen Produkten ist der metallische Glanz gemein. Es besteht daher der Bedarf nach neuen optisch variablen Effekten, die sich von den herkömmlichen nicht nur durch das Motiv des Hologramms, sondern auch durch die Grundfarbe bzw. einen unterschiedlichen Glanz unterscheiden.

Aus KR 10079525 ist eine Hologrammfolie sowie ein Verfahren zu deren Herstellung bekannt. Der Aufbau besteht dabei aus einem Trägersubstrat, einer Releaseschicht, einer geprägten Schicht (Hologrammschicht), einer partiellen Metallschicht, einer Maskierungsschicht, einer Druckschicht und einer Klebeschicht. Die Druckschicht und die Klebeschicht weisen dabei unterschiedliche fluoreszierende Merkmale auf. Ein Manipulationsnachweis ist bei diesem Aufbau nicht möglich.

Aus EP-A 1 972 674 ist ein Sicherheitsetikett oder -klebeband mit Manipulationsnachweis bekannt, bei dem bei Ablösen des Etiketts vom zu sichernden Gegenstand oder der zu sichernden Verpackung ein verborgenes optisches Element sichtbar wird.

Aufgabe der Erfindung war es daher, ein Sicherheitsetikett oder -klebeband bereitzustellen, das sowohl ein optisch aktives Sicherheitselement als auch einen optisch erkennbaren Manipulationsnachweis aufweist und sich im optischen Gesamteindruck von herkömmlichen metallisch glänzenden optisch aktiven Strukturen unterscheidet.

In US2002191234 befinden sich das Reliefhologramm 12 und die partielle Trennlackschicht 15 auf unterschiedlichen, einander gegenüberliegenden Oberflächen eines zusätzlichen Trägersubstrats 14. Der Nachteil dieses Sicherheitsetiketts liegt darin, dass bei einem Manipulationsversuch die große Gefahr besteht, dass eine Trennung der Schichten nicht unbedingt im Bereich der Releaseschicht, sondern auch im Bereich des Hologrammaufbaus, insbesondere im Bereich der Kleberschicht 17 mit dem der Aufbau auf dem Trägersubstrat 14 befestigt ist, erfolgt. Dabei wäre dann ein Manipulationsnachweis nicht eindeutig gegeben, da in diesem Fall keine Trennung in einer Schicht, mit Verbleib von Teilen dieser Schicht auf dem abgezogenen Teil und Teilen der Schicht, die auf dem zu sichernden Gegenstand verbleiben, erfolgt. Außerdem weist das Etikett durch die Verwendung des Trägersubstrats 14 ein hohe Dicke auf.

Gegenstand der Erfindung ist daher ein Sicherheitsetikett oder -klebeband mit Manipulationsnachweis aufweisend ein flexibles Trägersubstrat auf Basis einer flexiblen Kunststofffolie, dadurch gekennzeichnet, dass auf eine Oberfläche des Trägersubstrats folgende Schichten aufgebracht sind:
a) eine geprägte Lackschicht
b) eine semitransparente Metallschicht bzw. eine Schicht mit hohem Brechungsindex
c) eine partielle Trennlackschicht in Form von Buchstaben, Zeichen, Symbolen, Linien, Guillochen, Zahlen oder Schriftzügen,
d) eine oder mehrere Lackschicht(en) mit optischen Eigenschaften,
e) eine Selbstklebebeschichtung,
wobei in den nicht mit der Trennlackschicht c) beschichteten Bereichen die Haftung aller Schichten untereinander und die Haftung der Schicht e) zum zu sichernden Gegenstand größer sind als die Haftung der Schicht d) zur Schicht e)
oder
die Haftung aller Schichten untereinander größer ist als die Haftung der Schicht e) zum zu sichernden Gegenstand
und wobei
in den mit der Trennlackschicht c) beschichteten Bereichen
die Haftung der aller Schichten untereinander und die Haftung der Schicht e) zum zu sichernden Gegenstand größer sind als die Haftung der Schicht c) zur Schicht b) oder die Haftung der Schicht c) zur Schicht d).

Als Trägersubstrat kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC, Fluorpolymere, wie Teflon und dergleichen in Frage. Die Trägerfolien weisen vorzugsweise eine Dicke von 5 - 700 µm, bevorzugt 5 - 200 µm, besonders bevorzugt 5 - 100 µm auf.

Auf eine Oberfläche des Trägersubstrats wird im ersten Schritt eine Lackschicht a) aufgebracht, die im selben Arbeitsgang oder in einem nachfolgenden Prozess geprägt wird. Die Haftung der Lackschicht a) zum Trägersubstrat muss so gut sein, dass weder beim Ablösen des Etiketts von einem Liner oder beim Abrollen des Klebebandes noch beim Auslösen des Manipulationsnachweises der Schichtverbund entlang dieser Grenzfläche trennt.

Ist die Haftung der Lackschicht a) zum Trägersubstrat ohne weitere Maßnahmen nicht groß genug, so kann auf das Trägersubstrat vor der Lackierung mit der Schicht a) eine Haftvermittlerschicht aufgebracht sein, die die Haftung der Lackschicht a) zum Trägersubstrat verbessert. Alternativ kann ein entsprechend chemisch oder physikalisch vorbehandeltes Trägersubstrat eingesetzt werden.

Es kann jedoch durchaus gewünscht sein, dass der Schichtverbund an der Grenzfläche zwischen Schicht a) und dem Trägersubstrat trennt, z.B. wenn das Etikett als sogenanntes Transferetikett ausgeführt wird. In dieser Ausführungsform der Erfindung ist die Haftung zwischen Schicht a) und dem Trägersubstrat geringer als die Haftung der Schichten a) bis e) untereinander. Nach Aufbringen des Etiketts auf einen Gegenstand mittels der Klebeschicht kann das Trägersubstrat abgezogen werden, ohne einen Manipulationsnachweis auszulösen. Dieser Manipulationsnachweis erfolgt dann z.B. durch den sogenannten Tesa-Test, indem ein Klebeband oder ein weiteres Etikett auf den am Gegenstand verbliebenen Schichtaufbau geklebt wird und wieder abgezogen wird. Dabei wird der Manipulationsnachweis ausgelöst und ein Teil der Schichten gemäß Anspruch 1 wieder abgezogen.

Zur Herabsetzung der Haftung kann das Trägersubstrat beispielsweise mit einer Releaseschicht versehen werden. Weist die geprägte Lackschicht a) bereits ohne weitere Maßnahmen eine schlechte Haftung zum Trägersubstrat auf, ist für die Anwendung als Transferetikett keine Releaseschicht notwendig. Als Releaseschichten kommen insbesondere bekannte schlecht haftende Lackzusammensetzungen, beispielsweise auf Methacrylatbasis in Frage. Ferner können auch sehr dünn aufgetragene Ölschichten, Polyamid-, Polyethylen-, Silikon- oder Fluorpolymerwachsschichten als Releaseschicht verwendet werden. Anschließend wird wie oben beschrieben die Lackschicht a) aufgebracht.

Die Lackschicht a) weist auf der dem Trägersubstrat abgewandten Oberfläche eine Oberflächenstruktur auf, beispielsweise ein Oberflächenrelief, ein Hologramm, eine Beugungsstruktur oder ein Beugungsgitter. Diese Struktur kann mittels bekannter Heißpräge- oder UV-Prägeverfahren durch Abformung von auf einem Prägewerkzeug vorhandenen Strukturen erzeugt werden. Bei Verwendung eines Heißprägeverfahrens ist die Lackschicht a) eine thermoplastische Lackschicht, beim Einsatz eines UV-Prägeverfahrens ist die Lackschicht a) strahlungshärtend. Derartige Prägeverfahren sind dem Fachmann hinlänglich bekannt, bzw. in der EP-A 1 310 381 offenbart, deren Inhalt hiermit vollumfänglich in die gegenständliche Anmeldung aufgenommen wird.

Die Schichtdicke der aufgebrachten Lackschicht a) kann je nach Anforderung an das Endprodukt und Dicke des Substrats variieren und beträgt im Allgemeinen zwischen 0,5 und 50 µm, vorzugsweise zwischen 2 und 10 µm, besonders bevorzugt zwischen 2 und 5 µm.

Die Lackschicht a) wird durch ein Beschichtungsverfahren, wie z.B. Sprühen, Gießen, Curtain Coating, Schlitzdüsenbeschichtung, Tauchen, Aufrakeln oder ein Druckverfahren, beispielsweise Tief-, Flexo-, Offset-, Sieb- oder Digitaldruck vollflächig oder partiell aufgebracht.

Anschließend wird auf die Lackschicht a) eine semitransparente metallische Schicht oder eine Schicht mit hohem Brechungsindex b) aufgebracht.

Die semitransparente metallische Schicht b) weist eine optische Dichte von etwa 0,1 bis 1,3, bevorzugt von 0,1 bis 0,8 auf. Bei einer solchen optischen Dichte ist gewährleistet, dass die Schicht noch hinreichend transparent ist, um den Betrachter noch die dahinterliegenden Schichten erkennen zu lassen.

Als semitransparente metallische Schichten kommen beispielsweise Schichten aus einem Metall, oder einer Legierung in Frage. Als Metallschicht sind Schichten aus AI, Cu, Fe, Ag, Au, Cr, Ni, Zn, Sn, Pt, Ti, Pd und dergleichen geeignet. Geeignete Legierungen sind beispielsweise Cu-Al Legierungen, Cu-Zn Legierungen und dergleichen.

Die metallische Schicht wird bevorzugt durch einen PVD- oder CVD- Prozess (Sputtern, Bedampfen, Gasphasenabscheidung) aufgebracht.

Alternativ kann die Schicht b) als HRI- (high refractive index) Schicht ausgeführt sein. Diese HRI-Schicht kann vorzugsweise aus einer Lackschicht mit hohem Brechungsindex, oder aus einer Schicht aus Metallverbindungen bestehen. Geeignete Metallverbindungen sind beispielsweise Oxide oder Sulfide von Metallen, insbesondere TiO₂, Cr-Oxide, ZnS, Cu-Oxide, Indium-Zinnoxid, Antimon-Zinnoxid, Antimon-Zinkoxid, FTO, ZnO, Al₂O₃ oder Siliciumoxide.

Lackschichten mit hohem Brechungsindex werden vorzugsweise durch bekannte Druck- oder Beschichtungsverfahren (siehe oben) aufgebracht, HRI-Schichten aus Metallverbindungen werden vorzugsweise durch einen PVD- oder CVD- Prozess (Sputtern, Bedampfen), aufgebracht.

Anschließend wird eine Trennlackschicht c) partiell, beispielsweise in Form von Buchstaben, Zeichen, Symbolen, Linien, Guillochen, Zahlen oder Schriftzügen aufgebracht.

Als Trennlack kommen bevorzugt bekannte, schlecht haftende Lackzusammensetzungen, beispielsweise auf Basis von Cylcloolefincopolymeren, Nitrocellulose, Acrylaten, Polyvinylchlorid, Ethylenacrylatcopolymeren oder Styrolacrylaten in einem geeigneten Lösungsmittel in Frage. Zur Einstellung der Haftung werden dabei vorzugsweise chlorierte Polyolefine zugesetzt. Der Anteil der chlorierten Polyolefine in der Zusammensetzung kann 0 bis 130 Gew% im Verhältnis zum Basispolymer betragen.
Alternativ können beliebige Lacksysteme, deren Haftung durch ein Additiv, beispielsweise ein Polyacrylat-Copolymer (verfügbar z.B. unter dem Markennamen BYK-394® von Fa. BYK-Chemie GmbH) verringert wird, verwendet werden.

Ferner können auch sehr dünn aufgetragene Polyamid-, Polyethylen-, Fluorpolymerwachsschichten oder Silikonbeschichtungen verwendet werden. Die Trennlackschicht kann gegebenenfalls mit Sicherheitspigmenten wie Fluoreszenzpigmenten und dergleichen versehen sein.

Die Haftung der Trennlackschicht c) wird so eingestellt, dass sich bei Auslösen des Manipulationsnachweises die Trennlackbeschichtung c) entweder von der Schicht b) oder der Schicht d) löst, der restliche Folienaufbau an diesen Stellen jedoch in seiner Struktur erhalten bleibt. Jedenfalls ist die Haftung der Trennlackschicht c) zur Schicht b) geringer als die Haftung der semitransparenten oder HRI-Schicht b) zur Prägelackschicht a).

Die Trennlackschicht c) wird durch ein Druckverfahren, beispielsweise durch Tief-, Flexo-, Offset-, Sieb- oder Digitaldruck partiell aufgebracht.

Auf diese Trennlackschicht werden eine oder mehrere Lackschicht(en) d) mit optischen Eigenschaften vollflächig oder partiell aufgebracht.

Die optischen Eigenschaften der Schicht d), insbesondere die Farbe lässt sich durch Farbstoffe bzw. Pigmente einstellen. Als Pigmente können alle bekannten Pigmente, beispielsweise Pigmente auf anorganischer Basis, wie Titandioxid, Zinksulfid, Kaolin, Indium-Zinnoxid, Antimon-Zinnoxid, Flour-Zinnoxid, Aluminium, Chrom- und Siliciumoxide, oder Pigmente auf organischer Basis, wie Phthalocyaninblau, i-Indolidingelb, Dioxazinviolett und dergleichen als auch farbige und/oder verkapselte Pigmente in chemisch, physikalisch oder reaktiv trocknenden Bindemittelsystemen verwendet werden. Als Farbstoffe kommen beispielsweise 1,1- oder 1,2- Chrom-Cobalt-Komplexe in Frage.

Weiters können Effekt- bzw. Sicherheitsfarbstoffe bzw. -pigmente zum Einsatz kommen, beispielsweise lumineszierende Farbstoffe bzw. Pigmente, die im sichtbaren, im UV-Bereich oder im IR-Bereich fluoreszieren bzw. phosphoreszieren, Effektpigmente wie Flüssigkristalle, Perlglanz, Bronzen und/oder Multilayer-Farbumschlagpigmente und thermochrome Farben bzw. Pigmente verwendet werden. Diese sind einzeln oder in allen möglichen Kombinationen einsetzbar. Auch Kombinationen zwischen sichtbaren und unsichtbaren Farb- und Effekt- bzw. Sicherheitspigmenten sind denkbar.

Diese Schicht(en) d) können aber auch einen definierten Farbverlauf aufweisen, oder auch im Mehrfarbendruck partiell oder vollflächig neben- oder übereinander teilweise oder vollständig überlappend ausgeführt sein.

Die Aufbringung der farbigen Schicht(en) d) erfolgt durch ein beliebiges Verfahren, bevorzugt jedoch durch ein Druckverfahren.

Die Dicke der Farbschichten d) ergibt sich aus der gewünschten Deckkraft der Farbe in Verbindung mit dem verwendeten Druckverfahren.

Anschließend ist eine Selbstklebebeschichtung e) aufgebracht. Mit Hilfe der Selbstklebebeschichtung wird das Sicherheitsetikett oder -klebeband auf den zu sichernden Gegenstand oder auf die zu sichernde Verpackung aufgeklebt.

Durch die unterschiedlichen partiellen Haftungsverhältnisse im Etikett zerreißt die Lackschicht d) beim Versuch, das Etikett bzw. Klebeband wieder vom zu sichernden Gegenstand abzuziehen. Ein Teil der Lackschicht d) verbleibt auf dem zu sichernden Gegenstand, der zweite Teil der Lackschicht d) wird mit dem Trägersubstrat vom Gegenstand abgezogen. Die beiden Teile verhalten sich komplementär zueinander, d.h. entweder sind auf dem abgezogenen Trägersubstrat positive und am Gegenstand negative Strukturen erkennbar, oder umgekehrt.

Folgende Randbedingungen müssen in jedem Fall eingehalten werden, um eine zuverlässige Funktion zu gewährleisten:
- In den nicht mit der Trennlackschicht c) beschichteten Bereichen tritt die geringste Haftung entweder zwischen der Schicht d) und der Schicht e) oder zwischen der Schicht e) und dem zu sichernden Gegenstand auf. Alle anderen Haftungen sind größer.
- In den mit der Trennlackschicht c) beschichteten Bereichen tritt die geringste Haftung entweder zwischen der Schicht b) und der Schicht c) oder zwischen der Schicht c) und der Schicht d) auf. Alle anderen Haftungen, einschließlich der Haftung zwischen der Selbstklebebeschichtung e) und dem zu sichernden Gegenstand sind größer.

Aufgrund der besonderen Umstände beim Auslösen des Manipulationsnachweises, die vom Hersteller des Etiketts nicht vorhergesehen werden können, können verschiedene Kombinationen der obigen Randbedingungen in ein und demselben Etikett auftreten. Die Auslegung des Etiketts wird jedoch zunächst so gewählt, dass in den beiden relevanten Bereichen (mit und ohne Trennlack c)) je einer der beiden obigen Fälle bevorzugt auftritt.

Gegebenenfalls kann auf der dem Aufbau gegenüber liegenden Oberfläche des Trägersubstrats noch ein Druckprimer aufgebracht sein, der eine nachträgliche Bedruckung eines Etiketts oder Klebebandes erleichtert bzw. ermöglicht.
Diese Bedruckung kann dabei beispielsweise aus kunden- oder produktspezifischen individuellen Daten bestehen, aber auch aus beliebigen Mustern, Zeichen, Symbolen und dergleichen.

Bei einer Verwendung als Klebeband kann gegebenenfalls auf der zweiten Oberfläche des Trägersubstrats eine Trennlackschicht aufgebracht sein um ein Aufrollen zu ermöglichen, wobei die Haftung der Selbstklebebeschichtung e) zu dieser zweiten Trennlackschicht schlechter ist als die Haftung zu dem durch die Schichten a) bis e) gebildeten Verbund.

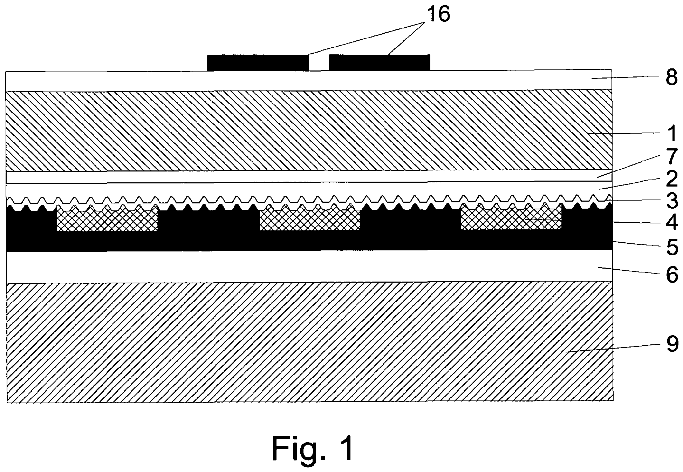

In den Figuren 1 bis 5 sind erfindungsgemäße Ausführungsformen dargestellt.

Dabei bedeuten
1 das Trägersubstrat
2 eine Lackschicht mit einer optisch aktiven Struktur (beispielsweise ein Hologramm)
3 eine semitransparente Metallschicht oder eine HRI Schicht
4 die partielle Trennlackschicht
5 die Schicht mit optischen Eigenschaften
6 eine Selbstklebebeschichtung
7 eine (optionale) Haftvermittlerschicht
8 eine (optionale) Druckprimerschicht
9 den Gegenstand, auf den das Etikett oder Klebeband aufgebracht ist
10, 11, 12, 13 Bereiche mit unterschiedlichen Haftungsverhältnissen
14 der Teil des Etiketts, der mit dem Trägersubstrat 1 abgezogen wird
15 der Teil des Etiketts, der auf dem zu sichernden Gegenstand 9 verbleibt
16 eine kundenspezifische Bedruckung
17 das erfindungsgemäße Sicherheitsetikett
18 der Teil der Schicht mit optischen Eigenschaften 5, der am zu sichernden Gegenstand 9 verbleibt und negative Aussparungen in Form von Zeichen aufweist
19 der Teil der Schicht mit optischen Eigenschaften 5 in Form von positiven Zeichen, der mit dem Trägersubstrat 1 abgezogen wird

Figur 1 zeigt im Querschnitt den Aufbau des Etiketts in aufgeklebtem Zustand. Figur 2 und 3 zeigen ebenfalls im Querschnitt den Zustand nach Auslösen des Manipulationsnachweises mit unterschiedlichen erfindungsgemäßen Auslösemechanismen. Figur 4 zeigt ein erfindungsgemäßes Sicherheitsetikett in Aufsicht, Figur 5 zeigt das selbe Sicherheitsetikett mit teilweise ausgelöstem Manipulationsnachweis.

In Figur 1 ist ein erfindungsgemäßes Etikett auf einen Gegenstand 9 aufgeklebt. Das Etikett besteht aus einem Trägersubstrat 1, das auf einer Oberfläche mit einem Druckprimer 8 beschichtet ist und anschließend mit einem sichtbaren Motiv 16 bedruckt ist. Auf der gegenüberliegenden Oberfläche befinden sich zunächst eine Haftvermittlerschicht 7, eine geprägte Lackschicht 2 und eine semitransparente metallische Schicht oder eine Schicht mit hohem Brechungsindex 3.

Auf die Schicht 3 ist anschließend eine partielle Trennlackschicht 4 aufgebracht, die von einer Schicht mit optischen Eigenschaften 5 bedeckt ist. Die Schicht 5 ist wiederum mit einer Selbstklebebeschichtung 6 versehen, mit der das Etikett oder Klebeband auf dem zu sichernden Gegenstand 9 fixiert wird.

In Figur 1 ist ein Beispiel gezeigt, bei dem der Benutzer die optisch aktive Struktur durch das Trägersubstrat 1 hindurch betrachtet, das Trägersubstrat 1 ist dazu zweckmäßigerweise transparent ausgeführt. Durch die semitransparente Metallschicht bzw. die HRI-Schicht 3 wird das Licht an der Grenzfläche zur Schicht 2 teilweise reflektiert und der diffraktive Effekt der optisch aktiven Struktur für den Betrachter sichtbar. Durch die teilweise Durchlässigkeit der Schicht für sichtbares Licht ist aber auch noch die darunterliegende Schicht mit optischen Eigenschaften 5 erkennbar. Somit überlagern sich die optisch aktive Struktur und die Farbschicht in günstiger Art und Weise. Für den Betrachter entsteht letztendlich der Eindruck eines Hologramms mit färbigem Hintergrund, das jedoch keinen metallischen Glanz aufweist, der ansonsten charakteristisch für herkömmliche geprägte und metallisierte Hologramme ist.

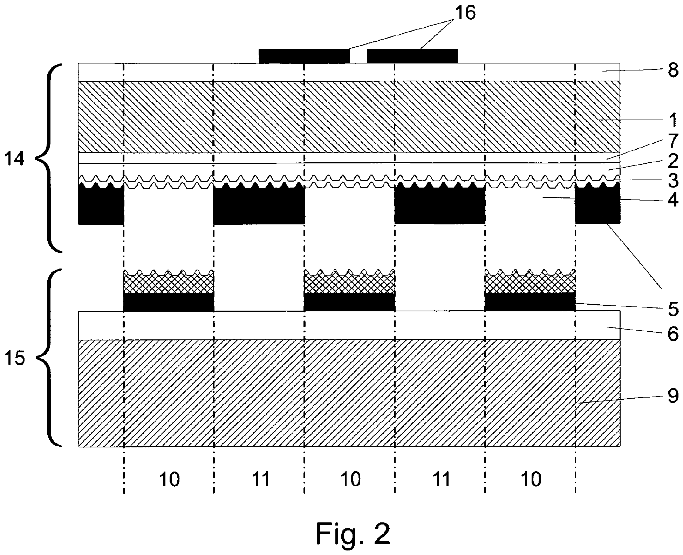

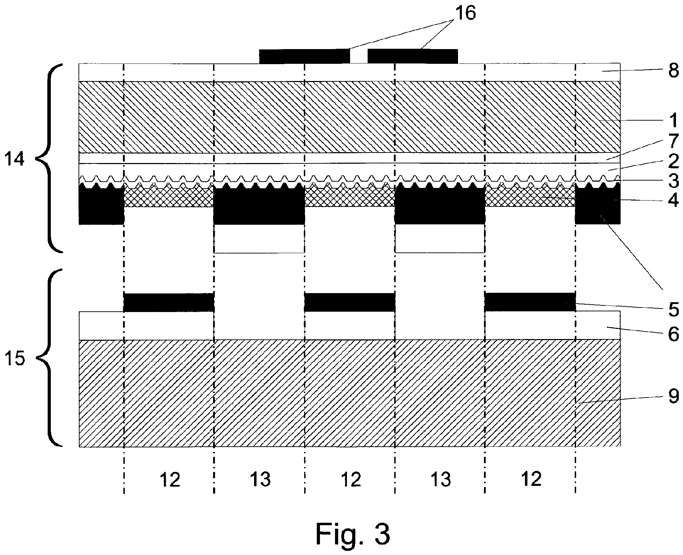

In den Figuren 2 und 3 wurde der Manipulationsnachweis durch Abziehen des Etiketts ausgelöst. Es ist deutlich erkennbar, dass Teile der Schicht mit optischen Eigenschaften 5 auf dem zu sichernden Gegenstand 9 verbleiben, und zwar genau in den Bereichen, in denen die Trennlackschicht 4 aufgedruckt ist. In den Bereichen ohne Trennlackschicht 4 bleibt die Schicht mit optischen Eigenschaften 5 auf dem abgezogenen Trägersubstrat 1 und dem darauf aufgebrachten Hologramm. Dieses "Zerreissen" der Schicht 5 ergibt für den Betrachter einen optischen Manipulationsnachweis in Form von Buchstaben, Zeichen, Symbolen, Linien, Guillochen, Zahlen oder Schriftzügen.

Die Figuren 2 und 3 unterscheiden sich in der genauen Ausformung der Haftungsverhältnisse der einzelnen Schichten untereinander. Die Bereiche 10 bis 13 verdeutlichen diese erfindungsgemäßen Haftungsverhältnisse zwischen den einzelnen Schichten, die beim Auslösen des Manipulationsnachweises zur Sichtbarmachung des optischen Effekts führen.

Im Bereich 10 trennt der Verbund zwischen der semitransparenten metallischen oder HRI-Schicht 3 und der Trennlackschicht 4, das bedeutet, dass die Haftung zwischen den Schichten 3 und 4 niedriger ist als die Haftung aller anderen Schichten untereinander und als die Haftung der Selbstklebebeschichtung 6 zum Gegenstand 9. Die Schicht mit optischen Eigenschaften 5 verbleibt also im Bereich 10 gemeinsam mit der Selbstklebebeschichtung 6 und der Trennlackschicht 4 auf dem zu sichernden Gegenstand 9.

Im Bereich 11 trennt der Verbund zwischen der Schicht mit optischen Eigenschaften 5 und der Selbstklebebeschichtung 6, das heißt, die Haftung zwischen den Schichten 5 und 6 ist geringer als die Haftung aller anderen Schichten untereinander und als die Haftung der Selbstklebebeschichtung 6 zum Gegenstand 9. Die Schicht mit optischen Eigenschaften 5 verbleibt also im Bereich 11 gemeinsam mit der Prägelackschicht 2 und der semitransparenten metallischen bzw. HRI-Schicht 3 auf dem abgezogenen Trägersubstrat 1.

Im Bereich 12 trennt der Verbund zwischen der Trennlackschicht 4 und der Schicht mit optischen Eigenschaften 5, das bedeutet, dass die Haftung zwischen den Schichten 4 und 5 niedriger ist als die Haftung aller anderen Schichten untereinander und als die Haftung der Selbstklebebeschichtung 6 zum Gegenstand 9. Die Schicht mit optischen Eigenschaften 5 verbleibt also im Bereich 10 gemeinsam mit der Selbstklebebeschichtung 6 auf dem zu sichernden Gegenstand 9.

Im Bereich 13 löst sich die Selbstklebebeschichtung 6 vom zu sichernden Gegenstand 9, das heißt, die Haftung der Selbstklebebeschichtung 6 zum Gegenstand 9 ist geringer als die Haftung aller anderen Schichten untereinander. Die Schicht mit optischen Eigenschaften 5 verbleibt also im Bereich 11 gemeinsam mit der Prägelackschicht 2, der semitransparenten metallischen bzw. HRI-Schicht 3 und der Selbstklebebeschichtung 6 auf dem abgezogenen Trägersubstrat 1.

Die obigen Haftungsverhältnisse müssen nicht notwendigerweise wie in Figur 2 und 3 gezeigt kombiniert sein, sondern können auch in der Kombination der Situation von Bereich 10 mit Bereich 13 oder in Kombination der Situation von Bereich 11 mit Bereich 12 auftreten. Je nach Ausformung des erfindungsgemäßen Etiketts tritt bevorzugt eine bestimmte Kombination der Haftungen auf, es kann aber aufgrund der unvorhersehbaren Art und Weise, wie der Manipulationsnachweis im Detail aktiviert, also wie das Trägersubstrat abgezogen wird, auch dazu kommen, dass alle gezeigten Trennsituationen der Bereiche 10 bis 13 auf ein und demselben Etikett gleichzeitig auftreten.

Es ist klar erkennbar, dass in den Bereichen 11 und 13 die Selbstklebebeschichtung 6 nach Auslösen des Manipulationsnachweises offen zu liegen kommt, d.h. wenn man die Oberfläche des Gegenstands mit den auf dem Gegenstand verbliebenen Schichten angreift, so ist der Rückstand 15 in den Bereichen 11 klebrig. In den Bereichen 13 bleibt die Selbstklebeschicht 6 auf dem abgezogenen Teil 14 des Etiketts und somit ist der abgezogene Teil 14 in den Bereichen 13 klebrig. Es ist also möglich, das Etikett oder das Klebeband nach Auslösen des Manipulationsnachweises wieder am Gegenstand 9 zu befestigen, der Manipulationsnachweis ist aber stets sichtbar, da die Positionierung des Etiketts oder Klebebandes nicht mehr so genau möglich ist, dass die beiden Teile der Schicht mit optischen Eigenschaften 5 wieder deckungsgenau zueinander zu liegen kommen.

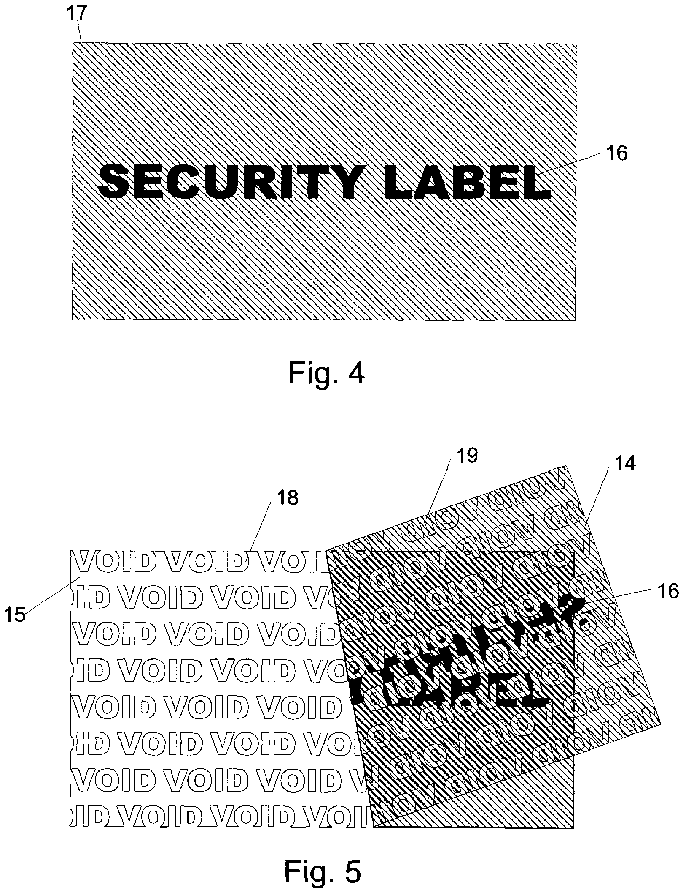

Figur 4 zeigt das erfindungsgemäße Sicherheitsetikett 17 in Aufsicht, auf dessen Sichtseite ein kundenspezifischer Druck 16 aufgebracht ist in aufgeklebtem Zustand vor einer Manipulation.

Figur 5 zeigt das erfindungsgemäße Sicherheitsetikett in teilweise abgezogenem Zustand, das heißt bei teilweise aktiviertem Manipulationsnachweis. Auf dem zu sichernden Gegenstand verbleibt der Teil 15 des Etiketts, der Aussparungen in der Schicht mit optischen Eigenschaften 5 in Form von negativen Zeichen 18 ("VOID") aufweist. Der auf dem abgezogenen Teil des Etiketts 14 verbleibende Teil der Schicht mit optischen Eigenschaften 5 liegt in Form von positiven Zeichen 19 vor.

### Beispielaufbau 1 (bedruckbares Sicherheitsetikett):

| Bezugszeichen | Schicht | Dicke / Auftragsgewicht | Zusammensetzung |
|---|---|---|---|
| 8 | Druckprimer | 1 g/m² | Polyester-basierendes Lacksystem, vernetzend, Lösemittel Methylethylketon |
| 1 | Trägersubstrat | 50 µm | PET |
| 7 | Primer | 0,5 g/m² | Acrylat-basiertes Lacksystem mit Isocyanaten vernetzt, Lösemittel Ethylacetat |
| 2 | UV-Lack mit Hologrammprägung | 3 g/m² | Acrylat-basiertes Lacksystem mit Photoinitiator, unverdünnt |
| 3 | Semitransparente Metallschicht | 0,5 OD (ca. 6,5 nm) | Aluminium, aufgedampft |
| 4 | Trennlack partiell | 0,2 g/m² | Cycloolefincopolymer mit 50% chlorierten Polyolefinen, Lösemittel Xylol |
| 5 | Färbiger, pigmentierter Lack | 4 g/m² | Lack auf PVC-Bindemittelbasis mit 15 % roten Farbpigmenten, Lösemittel Ethylacetat |
| 6 | Selbstklebebeschichtung | 10 g/m² | |

### Beispielaufbau 2 (Sicherheitsetikett):

| Bezugszeichen | Schicht | Dicke / Auftragsgewicht | Zusammensetzung |
|---|---|---|---|
| 1 | Trägersubstrat | 23 µm | PET, einseitig chemisch vorbehandelt |
| 2 | UV-Lack mit Hologrammprägung | 3 g/m² | Acrylat-basiertes Lacksystem mit Photoinitiator, unverdünnt |
| 3 | HRI-Beschichtung | 50 nm | ZnS, aufgedampft |
| 4 | Trennlack partiell | 0,2 g/m² | Cycloolefincopolymer mit 50% chlorierten Polyolefinen, Lösemittel Xylol |
| 5 | Mehrfarbdruck, partiell nebeneinander | Je Farbe 4 g/m² | Lacke auf PVC-Bindemittelbasis mit je 15% roten, blauen oder weißen |
| | | | Farbpigmenten, Lösemittel Ethylacetat |
| 6 | Selbstklebebeschichtung | 10 g/m² | |

### Beispielaufbau 3 (Sicherheitsklebeband):

| Bezugszeichen | Schicht | Dicke / Auftragsgewicht | Zusammensetzung |
|---|---|---|---|
| | Trennlackschicht | 0,1 g/m² | Silikon beschichtung |
| 1 | Trägersubstrat | 23 µm | PET |
| 7 | Primer | 0,5 g/m² | Acrylat-basiertes Lacksystem mit Isocyanaten vernetzt, Lösemittel Ethylacetat |
| 2 | Heißprägelack | 3 g/m² | PMMA-basiertes Lacksystem, Lösemittel Ethylacetat |
| 3 | Semitransparente Metallschicht | 0,5 OD (ca. 6,5 nm) | Aluminium, aufgedampft |
| 4 | Trennlack partiell | 0,2 g/m² | PVC-basierter Lack mit 2% Haftungsadditiv (Polyacrylat-Copolymer) in Lösemittel Ethylacetat |
| 5 | Färbiger Lack mit Farb- und UV-Pigmenten | 3 g/m² | Lack auf Nitrocellulose-Bindemittelbasis mit 10% gelben Farbpigmenten und 10% unter UV-Licht rot fluoreszierenden Pigmenten, Lösemittel Ethylacetat |
| 6 | Selbstklebebeschichtung | 15 g/m² | |

## Patentansprüche

1. Sicherheitsetikett oder -klebeband mit Manipulationsnachweis aufweisend ein flexibles Trägersubstrat (1) auf Basis einer flexiblen Kunststofffolie, **dadurch gekennzeichnet, dass** auf eine Oberfläche des Trägersubstrats Schichten in folgender Reihenfolge aufgebracht sind:
a) eine geprägte Lackschicht (2)
b) eine semitransparente Metallschicht bzw. eine Schicht mit hohem Brechungsindex (3)
c) eine partielle Trennlackschicht (4) in Form von Buchstaben, Zeichen, Symbolen, Linien, Guillochen, Zahlen oder Schriftzügen,
d) eine oder mehrere Lackschicht(en) (5) mit optischen Eigenschaften,
e) eine Selbstklebebeschichtung (6), wobei in den nicht mit der Trennlackschicht (4) beschichteten Bereichen die Haftung aller Schichten untereinander und die Haftung der Selbstklebebeschichtung (6) zum zu sichernden Gegenstand größer sind als die Haftung der Lackschicht (5) zur Selbstklebebeschichtung (6) oder die Haftung aller Schichten untereinander größer ist als die Haftung der Selbstklebebeschichtung (6) zum zu sichernden Gegenstand (9) und wobei in den mit der Trennlackschicht (4) beschichteten Bereichen die Haftung aller Schichten untereinander und die Haftung der Selbstklebebeschichtung (6) zum zu sichernden Gegenstand (9) größer sind als die Haftung der Metallschicht bzw. Schicht mit hohem Brechungsindex (3) zur Trennlackschicht (4) oder die Haftung der Trennlackschicht (4) zur Lackschicht (5).

2. Sicherheitsetikett oder -klebeband nach Anspruch 1, **dadurch gekennzeichnet, dass** das Trägersubstrat (1) aus einer transparenten Kunststofffolie besteht.

3. Sicherheitsetikett oder -klebeband nach einem der Ansprüche 1 bis 2, **dadurch gekennzeichnet, dass** auf der anderen Oberfläche des Trägersubstrats (1) eine Druckprimerschicht (8) aufgebracht ist.

4. Sicherheitsetikett oder -klebeband nach einem der Ansprüche 1 bis 2, **dadurch gekennzeichnet, dass** auf der anderen Oberfläche des Trägersubstrats (1) eine Trennlackschicht aufgebracht ist.

5. Sicherheitsetikett oder -klebeband nach einem der Ansprüche 1 bis 4, **dadurch gekennzeichnet, dass** zwischen Trägersubstrat (1) und geprägter Lackschicht (2) eine Haftvermittlerschicht (7) situiert ist.

6. Sicherheitsetikett oder -klebeband nach einem der Ansprüche 1 bis 4, **dadurch gekennzeichnet, dass** zwischen Trägersubstrat (1) und geprägter Lackschicht (2) eine Releaseschicht situiert ist.

7. Sicherheitsetikett oder -klebeband nach einem der Ansprüche 1 bis 6, **dadurch gekennzeichnet, dass** die Schicht mit optischen Eigenschaften (5) im Mehrfarbendruck, als Farbverlaufsschicht und/oder als Schicht mit Effekt- bzw. Sicherheitsfarbstoffen oder -pigmenten ausgeführt ist.

8. Sicherheitsetikett oder -klebeband nach einem der Ansprüche 1 bis 7, **dadurch gekennzeichnet, dass** nach Auslösen des Manipulationsnachweises auf dem zu sichernden Gegenstand (9) positive und auf dem abgezogenen Trägersubstrat (1) negative Buchstaben, Zeichen, Symbolen, Linien, Guillochen, Zahlen oder Schriftzüge oder umgekehrt erkennbar werden.

9. Sicherheitsetikett oder -klebeband nach einem der Ansprüche 1 bis 8, **dadurch gekennzeichnet, dass** die Metallschicht bzw. Schicht mit hohem Brechungsindex (3) eine semitransparente Metallschicht aus Al, Cu, Fe, Ag, Au, Cr, Ni, Zn, Sn, Pt, Ti, Pd oder aus einer Legierung dieser Metalle ist.

10. Sicherheitsetikett oder -klebeband nach einem der Ansprüche 1 bis 8, **dadurch gekennzeichnet, dass** die Metallschicht bzw. Schicht mit hohem Brechungsindex (3) eine HRI-Schicht aus einer Metallverbindung ist.

11. Sicherheitsetikett oder -klebeband nach einem der Ansprüche 1 bis 8, **dadurch gekennzeichnet, dass** die Metallschicht bzw. Schicht mit hohem Brechungsindex (3) eine HRI-Lackschicht ist.

12. Sicherheitsetikett oder -klebeband nach einem der Ansprüche 1 bis 11, **dadurch gekennzeichnet, dass** die Lackschicht (2) eine geprägte UV-Lackschicht ist.

13. Sicherheitsetikett oder -klebeband nach einem der Ansprüche 1 bis 12, **dadurch gekennzeichnet, dass** die Lackschicht (2) eine Heißprägelackschicht ist.

14. Sicherheitsetikett oder -klebeband nach einem der Ansprüche 1 bis 12, **dadurch gekennzeichnet, dass** das Etikett oder Klebeband auf der Druckprimerschicht (8) oder der nicht beschichteten Oberfläche des Trägersubstrats (1) bedruckt ist.

15. Sicherheitsetikett oder -klebeband nach einem der Ansprüche 1 bis 14, **dadurch gekennzeichnet, dass** die Lackschicht (2) eine Prägung in Form eines Hologramm, einer Beugungsstruktur oder eines Beugungsgitters aufweist.

16. Sicherheitsetikett oder -klebeband nach Anspruch 15, **dadurch gekennzeichnet, dass** es den optischen Eindruck eines Hologramms mit färbigem Hintergrund vermittelt und keinen metallisch reflektierenden Charakter besitzt.

## Claims

1. Security label or adhesive tape with proof of tampering, comprising a flexible carrier substrate (1) based on a flexible plastic film, **characterized in that** layers are applied in the following sequence to a surface of the carrier su bstrate:
a) an embossed lacquer layer (2),
b) a semi-transparent metal layer or a layer with a high refractive index (3),
c) a partial release lacquer layer (4) in the form of letters, characters, symbols, lines, guilloches, numbers or lettering,
d) one or more lacquer layer(s) (5) with optical properties,
e) a self-adhesive coating (6),
wherein, in the areas not coated with the release lacquer layer (4), the adhesion of all layers to one another and the adhesion of the self-adhesive coating (6) to the article to be protected is greater than the adhesion of the lacquer layer (5) to the self-adhesive coating (6) or the adhesion of all layers to one another is greater than the adhesion of the self-adhesive coating (6) to the article (9) to be protected, and wherein, in the areas coated with the release lacquer layer (4), the adhesion of all layers to one another and the adhesion of the self-adhesive coating (6) to the article (9) to be protected is greater than the adhesion of the metal layer or layer with a high refractive index (3) to the release lacquer layer (4) or the adhesion of the release lacquer layer (4) to the lacquer layer (5).

2. Security label or adhesive tape according to claim 1, **characterized in that** the carrier substrate (1) consists of a transparent plastic film.

3. Security label or adhesive tape according to one of claims 1 to 2, **characterized in that** a print primer layer (8) is applied to the other surface of the carrier substrate (1).

4. Security label or adhesive tape according to one of claims 1 to 2, **characterized in that** a release lacquer layer is applied to the other surface of the carrier substrate (1).

5. Security label or adhesive tape according to one of claims 1 to 4, **characterized in that** an adhesion promoter layer (7) is located between carrier substrate (1) and embossed lacquer layer (2).

6. Security label or adhesive tape according to one of claims 1 to 4, **characterized in that** a release layer is located between carrier substrate (1) and embossed lacquer layer (2).

7. Security label or adhesive tape according to one of claims 1 to 6, **characterized in that** the layer with optical properties (5) is designed in multicolor printing, as a color gradient layer and/or as a layer with effect or security dyes or pigments.

8. Security label or adhesive tape according to one of claims 1 to 7, **characterized in that**, after triggering the tamper evidence, on the article (9) to be protected positive letters, signs, symbols, lines, guilloches, numbers or lettering and on the removed carrier substrate negative letters, signs, symbols, lines, guilloches, numbers or lettering become visible or vice versa.

9. Security label or adhesive tape according to one of claims 1 to 8, **characterized in that** the metal layer or layer with high refractive index (3) is a semi-transparent metal layer of Al, Cu, Fe, Ag, Au, Cr, Ni, Zn, Sn, Pt, Ti, Pd or of an alloy of these metals.

10. Security label or adhesive tape according to one of claims 1 to 8, **characterized in that** the metal layer or layer with high refractive index (3) is an HRI layer of a metal compound.

11. Security label or adhesive tape according to one of claims 1 to 8, **characterized in that** the metal layer or layer with high refractive index (3) is an HRI lacquer layer.

12. Security label or adhesive tape according to one of claims 1 to 11, **characterized in that** the lacquer layer (2) is an embossed UV lacquer layer.

13. Security label or adhesive tape according to one of claims 1 to 12, **characterized in that** the lacquer layer (2) is a hot-stamping lacquer layer.

14. Security label or adhesive tape according to one of claims 1 to 12, **characterized in that** the label or adhesive tape is printed on the print primer layer (8) or the uncoated surface of the carrier substrate (1).

15. Security label or adhesive tape according to one of claims 1 to 14, **characterized in that** the lacquer layer (2) has an embossing in the form of a hologram, a diffraction structure or a diffraction grating.

16. Security label or adhesive tape according to claim 15, **characterized in that** it gives the optical impression of a hologram with a colored background and does not have a metallically reflective character.

## Revendications

1. Étiquette ou ruban adhésif de sécurité avec indicateur de manipulation, présentant un substrat de support flexible (1) ayant pour base un film de plastique flexible, **caractérisé en ce que** des couches sont appliquées sur une surface du substrat de support dans l'ordre suivant :
a) une couche de vernis gaufrée (2)
b) une couche métallique semi-transparente ou une couche à indice de réfraction élevé (3)
c) une couche partielle de vernis de séparation (4) prenant la forme de lettres, de caractères, de symboles, de lignes, de guilloches, de chiffres ou d'écritures,
d) une ou plusieurs couches de vernis (5) ayant des propriétés optiques,
e) un revêtement autocollant (6),
dans lesquels l'adhérence de toutes les couches entre elles et l'adhérence du revêtement autocollant (6) à l'objet à protéger dans les zones non revêtues de la couche de vernis de séparation (4) sont plus grandes que l'adhérence de la couche de vernis (5) au revêtement autocollant (6)
ou l'adhérence de toutes les couches entre elles est plus grande que l'adhérence du revêtement autocollant (6) à l'objet à protéger (9)
et l'adhérence de toutes les couches entre elles et l'adhérence du revêtement autocollant (6) à l'objet à protéger (9) dans les zones revêtues de la couche de vernis de séparation (4) sont plus grandes que l'adhérence de la couche métallique ou de la couche à indice de réfraction élevé (3) à la couche de vernis de séparation (4) ou que l'adhérence de la couche de vernis de séparation (4) à la couche de vernis (5).

2. Étiquette ou ruban adhésif de sécurité selon la revendication 1, **caractérisés en ce que** le substrat de support (1) se compose d'un film de plastique transparent.

3. Étiquette ou ruban adhésif de sécurité selon l'une des revendications 1 à 2, **caractérisés en ce qu'**une couche d'apprêt d'impression (8) est appliquée sur l'autre surface du substrat de support (1)

4. Étiquette ou ruban adhésif de sécurité selon l'une des revendications 1 à 2, **caractérisés en ce qu'**une couche de vernis de séparation est appliquée sur l'autre surface du substrat de support (1)

5. Étiquette ou ruban adhésif de sécurité selon l'une des revendications 1 à 4, **caractérisés en ce qu'**une couche d'activateur d'adhérence (7) est située entre le substrat de support (1) et la couche de vernis gaufrée (2).

6. Étiquette ou ruban adhésif de sécurité selon l'une des revendications 1 à 4, **caractérisés en ce qu'**une couche de décollement est située entre le substrat de support (1) et la couche de vernis gaufrée (2).

7. Étiquette ou ruban adhésif de sécurité selon l'une des revendications 1 à 6, **caractérisés en ce que** la couche ayant des propriétés optiques (5) est réalisée par impression en plusieurs couleurs sous la forme d'une couche à couleur changeante et/ou d'une couche avec des colorants ou pigments à effets et/ou de sécurité.

8. Étiquette ou ruban adhésif de sécurité selon l'une des revendications 1 à 7, **caractérisés en ce qu'**après le décollement de la preuve de manipulation, des lettres, symboles, lignes, guilloches, nombres ou écritures sont visibles en positif sur l'objet à protéger (9) et en négatif sur le substrat de support (1) décollé ou vice versa.

9. Étiquette ou ruban adhésif de sécurité selon l'une des revendications 1 à 8, **caractérisés en ce que** la couche métallique ou la couche à indice de réfraction élevé (3) est une couche métallique semi-transparente en Al, Cu, Fe, Ag, Au, Cr, Ni, Zn, Sn, Pt, Ti, Pd ou en alliage de ces métaux.

10. Étiquette ou ruban adhésif de sécurité selon l'une des revendications 1 à 8, **caractérisés en ce que** la couche métallique ou la couche à indice de réfraction élevé (3) est une couche HRI faite d'un composite métallique.

11. Étiquette ou ruban adhésif de sécurité selon l'une des revendications 1 à 8, **caractérisés en ce que** la couche métallique ou la couche à indice de réfraction élevé (3) est une couche de vernis HRI

12. Étiquette ou ruban adhésif de sécurité selon l'une des revendications 1 à 11, **caractérisés en ce que** la couche de vernis (2) est une couche gaufré de vernis polymérisable aux UV.

13. Étiquette ou ruban adhésif de sécurité selon l'une des revendications 1 à 12, **caractérisés en ce que** la couche de vernis (2) est une couche de vernis gaufrée à chaud.

14. Étiquette ou ruban adhésif de sécurité selon l'une des revendications 1 à 12, **caractérisés en ce que** l'étiquette ou le ruban adhésif est imprimé sur la couche d'apprêt d'impression (8) ou sur la surface non enduite du substrat de support (1).

15. Étiquette ou ruban adhésif de sécurité selon l'une des revendications 1 à 14, **caractérisés en ce que** la couche de vernis (2) présente un gaufrage formant un hologramme, une structure de diffraction ou une grille de diffraction.

16. Étiquette ou ruban adhésif de sécurité selon la revendication 15, **caractérisés en ce qu'**ils créent l'impression optique d'un hologramme à fond coloré et n'ont pas un caractère métallique réfléchissant.
